# EUROPEAN PATENT SPECIFICATION

(11) **EP 2 943 768 B1**
(45) Date of publication and mention of the grant of the patent: **04.01.2023**
(21) Application number: 14700417.0
(22) Date of filing: 14.01.2014
(51) Int. Cl.: G01M 11/02, G02B 7/00, G02B 13/00, G02B 27/62

(54) **A METHOD OF ALIGNING OPTICAL WAFERS AND A LENS STACK**
VERFAHREN ZUR AUSRICHTUNG OPTISCHER WAFER UND LINSENSTAPEL
PROCÉDÉ D'ALIGNEMENT DE TRANCHES OPTIQUES ET EMPILEMENT DE LENTILLES

(30) Priority: 14.01.2013 GB 201300634
(43) Date of publication of application: 18.11.2015
(73) Proprietor: Kaleido Technology ApS, 3520 Farum (DK)
(72) Inventor: SORTKJAER, Kasper L., DK-3520 Farum (DK); HOLME, Niels Christian Rømer, 2880 Bagsværd (DK); OFFERSGAARD, Jesper Falden, 2740 Skovlunde (DK)
(74) Representative: Novagraaf International SA
(86) International application number: PCT/EP2014/050621
(87) International publication number: WO 2014/108565

(56) References cited:
- EP-A2- 1 675 165
- WO-A1-2010/139764
- WO-A2-2004/027880
- WO-A2-2006/133404
- US-A1- 2005 094 937
- US-A1- 2005 255 624

## Description

The present invention relates to a lens stack and a method of aligning optical wafers.

In many types of optical devices currently used, lens stacks are used as opposed to individual lenses. This can be for a number of different reasons which might typically relate to the function of the device and the type of imaging that is to be performed using the device and the associated lens arrangements.

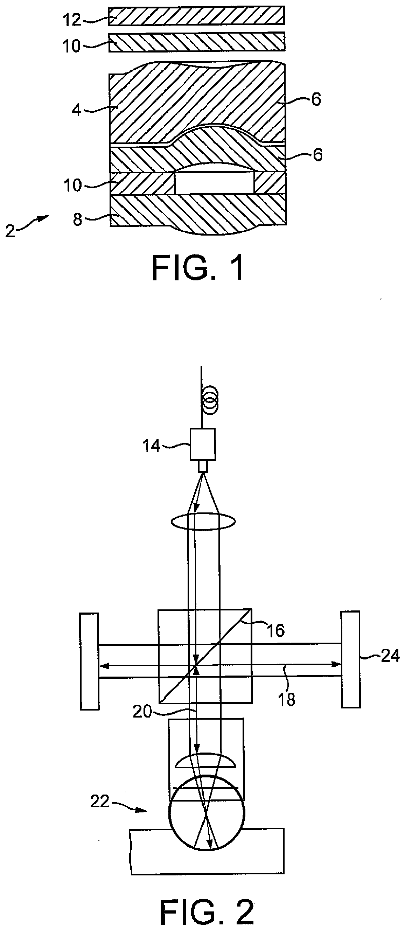

Figure 1 shows a schematic representation of a lens stack that might typically be provided as a lens arrangement within a camera from a mobile telephone. The lens stack is shown arranged in an imaging device. The lens stack 2 comprises three lens elements 4, 6 and 8. A spacer layer 10 is provided and an optical filter 11 and detector 12 are also provided. The precise function of each of the lenses 4, 6 and 8 is not particularly important to the present discussion. However it is important that the optical axes of the individual lens elements 4, 6 and 8 are aligned or arranged with a known offset.

Typically to achieve such alignment, a frame (not shown) is provided within which each of the individual lens elements (and indeed the other components forming the stack) are placed. The presence of the outer frame ensures that the lens elements 4, 6 and 8 are aligned in such a way that the lens stack can perform its required functions. Furthermore in some applications more than one lens stack may be used in a lens array. In such cases again it is typical that a frame be used having plural openings to receive the lens stacks.

Aligning individual lens elements within a frame is both time consuming and prone to error. Therefore some means for achieving the alignment of the lens elements in a quicker and more efficient manner is desired.

Wafer-based lens moulding is known. In this technology, plural lenses are moulded onto a common wafer of optical material, such as glass or optical polymer. By using such a method, it is possible to simultaneously arrange plural lens stacks such as that shown in Figure 1. Indeed, if there are provided plural wafers each having plural lenses moulded thereon in the same positions on the wafer then by aligning the wafers there will be a simultaneous alignment of all of the different sets of individual lens elements. Although such a process may take longer than aligning a single lens stack within a frame, the time per lens or lens stack can be significantly reduced using wafer-based alignment.

It can be extremely difficult to align wafers having plural lens elements formed on them in such a way that every one of the resultant lens stacks is sufficiently and appropriately aligned (or positioned with a fixed and known offset) for further use.

According to the first aspect of the present invention, there is provided a method of aligning optical wafers as set out in one of the appending independent claims According to aspects of the present invention, there is provided methods of making a wafer-based lens stack as set out in the appending claims. According to another aspect of the present invention, there is provided a system for a method of aligning optical wafers as set out in one of the appending independent claims.

There is also disclosed herein a method of aligning optical wafers having formed thereon plural lens elements in determined positions, the method comprising: providing a first wafer having at least one reflector and one lens formed thereon in fixed and determined relative positions; providing a second wafer having at least one reflector and one lens formed thereon in fixed and determined relative positions; using a first interferometer to align a first wafer by optical interaction between the interferometer and the reflector on the first wafer; using a second interferometer to align a second wafer by optical interaction between the interferometer and the reflector on the second wafer, whereby the relative position of the lenses on each of the first and second wafer are thereby determined.

Preferably, the lenses on each of the first and second wafer are thereby aligned, 1.e. positioned such that their optical axes are coincident. In one example the relative positioning might be such that there is some known offset between the optical axes of the corresponding lenses on the first and second wafers.

A method is provided by which by aligning a wafer with respect to the position of a reflector on the first wafer, and aligning a second wafer with respect to the position of a reflector on the second wafer, a lens on each of the first and second wafers is also aligned in view of the determined relative positioning of the reflectors and lenses on each of the wafers.

Preferably, the reflectors on the first and/or second wafers are lenses. The reflector on the first wafer and the reflector on the second wafer is used exclusively for alignment of the wafers. The first and second wafers each have at least three reflectors used for alignment of the wafers. Preferably, the method further comprises generating an output signal from the interferometers for use in determining the position of the corresponding wafer.

Preferably, the method comprises, in dependence on the output signal modifying or fixing the position of the wafer using an actuator. Preferably, the method comprises, in dependence on the output signal modifying or fixing the position of the wafer using at least 6 actuators, so as to vary the position and/or orientation of the wafers in 3 dimensions.

There is also disclosed herein a method of making a wafer-based lens stack, the method comprising: aligning two or more glass wafers using the method above; once the two or more wafers are aligned as desired, fixing the wafers in place.

Preferably the wafers are fixed in place in that prior to alignment a curable optical polymer or glue is provided on a surface of one or both of the wafers, and during alignment the wafers are moved towards each other such that the space between them becomes filled (fully or partially) with the polymer or glue. The polymer or glue may then be cured. Alternatively, a curable optical polymer or glue is injected into a space between the wafers after alignment and subsequently curing radiation is applied to fix the wafers in place with the curable optical polymer.

Preferably, the method comprises, after the wafers have been fixed in place but prior to injecting the curable optical polymer, inserting a spacer disc between the wafers.

Preferably, the method comprises, after the wafers have been fixed in place, cutting one or more lens stacks from the fixed wafer assembly.

There is also disclosed herein a system for aligning optical wafers each having formed thereon plural lens elements in determined positions, the system comprising: a first interferometer to align a first wafer by optical interaction between the interferometer and a first of the lens elements on the first wafer; a second interferometer to align a second wafer by optical interaction between the interferometer and a first of the lens elements on the second wafer; plural actuators arranged to control the position of the first and second wafers and to move the wafers in response to outputs received from the interferometers.

Preferably, the system comprises an alignment chamber arranged to receive the wafers, in which the actuators are configured to control the position of the wafers in the alignment chamber.

Preferably, the actuators are linear actuators. Preferably, 6 actuators are provided on each wafer so as to be able to move each wafer in either direction along each of three orthogonal axes.

There is also disclosed herein a method of forming an optical wafer, the method comprising: using a common mask or mold, forming optical elements on the wafer and alignment means on the wafer in fixed relationship to the optical elements;

There is also disclosed herein a method of aligning optical wafers having formed thereon at least one optical component and a reflector in determined positions, the method comprising: providing a first wafer having at least one reflector and one optical component formed thereon in fixed and determined relative positions; providing a second wafer having at least one reflector and one optical component formed thereon 1n fixed and determined relative positions; using a first interferometer to align a first wafer by optical interaction between the interferometer and the reflector on the first wafer, using a second interferometer to align a second wafer by optical interaction between the interferometer and the reflector on the second wafer; whereby the relative position of the optical components on each of the first and second wafer is thereby determined.

Thus, like the methods described above, interferometers are used to align optical components formed on an optical wafer. However, in this method the optical components may not necessarily be lenses. They could for example be other reflectors or gratings or the like. Any features expressed above as being preferable may be provided in combination with any one or more other such features and with any of the aspects of the invention. In particular, and for example only, features expressed as being preferably included in the first aspect of the invention could also be provided in the others.

Preferably, the optical wafer is formed of glass.

Embodiments of the present invention will now be described in detail with reference to the accompanying drawings, in which
Figure 1 is a schematic representation of a lens stack;
Figure 2 is a schematic representation of an optical interferometer;
Figure 3 is a schematic representation of a lens alignment system;
Figure 4 is a plan view of an optical wafer including optical alignment lenses;
Figure 5 is a side view of a lens alignment system; and,
Figure 6 is a schematic representation of a side view of two optical wafers arranged for engagement.

The principle by which optical interferometry operates is well known. Figure 2 shows a schematic representation of an optical interferometer. The set-up of the optical interferometer is well known. The interferometer operates by providing an optical source 14 together with a beam splitter 16. A reference beam 18 propagates in a first direction and the test beam 20 continues in a direction of a sample 22. Reflected beams recombine at the beam splitter 16 and an image detector 24 produces an interference pattern. By varying the distance and relative angular configuration of the sample 22 with
respect to the beam splitter 16, the interference pattern generated at the detector 24 varies. In view of the fact that interferometer operation is well known and understood, further description will not now be provided of it.

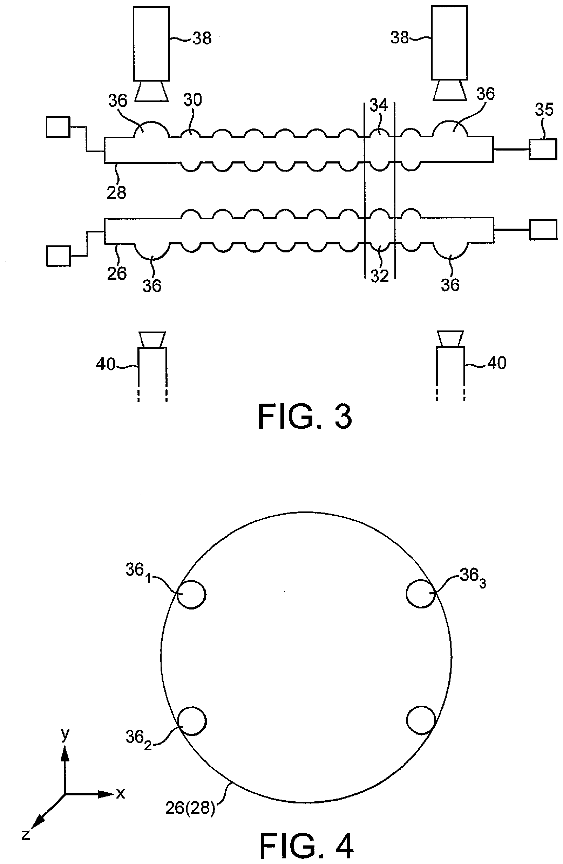

Reference is now made to Figure 3, which shows a system and means for aligning two optical wafers. First and second optical wafers 26 and 28 are provided. The wafers 26 and 28 are preferably formed with the different moulds and are formed of an optical material such as glass or an optical polymer. Each of the wafers includes plural lens elements 30. If the two wafers are to be fixed in some relative configuration such that lens elements from each of the two wafers can be arranged within a common
lens stack, then the relative position and orientation of the two wafers 26 and 28 and the respective lens elements needs to be carefully determined. As can be seen, in the example shown, lens element 32 on wafer 26 is vertically aligned with lens element 34 on wafer 28. This means that if the two wafers can be fixed in the shown positioning then each of the lens elements on 26 will be aligned with a corresponding lens element on the wafer 28.

The wafers 26 and 28 are provided with reference lenses 36 which function as reflectors. The reference lenses or reflectors 36 are used together with interferometers 38 to ensure alignment with each other and therefore corresponding alignments of the various pairs of lens elements on the respective wafers 26 and 28.

Plural actuators 35 are provided which are arranged to control the position of the wafers. Thus the actuators are able to move the wafers in any and all directions such as to vary the position of the reference lenses relative to the interferometers 38 and 40. It is preferred that three or six actuators are provided for each of the wafers. The movement of the wafers is preferably determined with the use of three interferometers directed at three different positions on each wafer. Considering the wafer 26 shown in Figure 4, initially a first interferometer is used with, say reflector 36₁. This is used to determine the position of the reflector 36₁ and hence the wafer 26 in 3 dimensional space, i.e. in x, y and z axes. Next, a second interferometer is used in combination with, say, reflector 36₂ to rotate the wafer about an axis in the z direction (i.e. about an axis out of the plane of the page) that passes through the reflector 36₁. Once this has been done, a third interferometer is used in combination with, say, reflector 36₃ to rotate the plane of the
wafer about an axis passing through reflectors 36₁ and 36₂. Thus, the overall position of the wafer in three dimensional space can be accurately determined and controlled.

The third interferometer mentioned above that serves to determine the angle of the wafer about the axis through the first two reflectors, can instead of being directed to a third reflector simply be directed to a position on the surface of the wafer of known height relative to the reflectors 36₁ and 36₂.

In one example, t the actuators may be unidirectional linear actuators, in which case it is preferable that 6 actuators are provided on each wafer. This enables movement in both directions along three orthogonal axes. Irrespective of how many actuators are provided, it is preferable that the actuators are arranged to receive a feedback control signal from the interferometers such as to control automatically the position of the wafer(s). In another example, three translational actuators are provided for (uni or bidirectional) movement along three axes, x, y and z and three further
actuators are provided for rotation about three axes, which are optionally the same axes as the axes of translational movement. It will be appreciated that the actual arrangement of actuators can be selected for a particular application but what is needed is that the actuators are able to accurately move and orientate the wafer in 3 dimensional space.

Figure 4 shows a plan view of a wafer 26 (or 28). The wafer includes plural lens elements (not shown) together with reference lens elements 36 formed at predetermined positions on the wafer. As will be explained below, an alignment system is provided including a frame to which are fixed the plural interferometers 38. The interferometers are calibrated so that they are aligned in pairs. Upper interferometers 38 are provided
together with lower interferometers 40. The upper interferometers 38 are used in conjunction with the reference lenses 36 on the wafer 28 to ensure that the wafer 28 is arranged at a specific position in three dimensional space. Similarly, the interferometers 40 arranged on the underside (as shown) of wafer 26 ensure, in combination with reference lenses 36 that the wafer 26 is arranged at a corresponding position in three dimensional space such that the lens elements on the wafer 26 will align with the lens elements 30 on the wafer 28.

The positioning of the reference lenses or reflectors 36 relative to the lenses 30 on the wafer is clearly important. This can be achieved in an extremely accurate and precise manner since a common mould can preferably be used to mould the reflectors and the lenses on each of the wafers 26 and 28. In other words, a single mould that has moulding regions shaped and sized to form the lenses 30 together with moulding regions shaped and sized to form the reference lenses or reflectors 36 is provided. This means
that in forming each of the moulds, the relative position of the reference lenses and the lens elements 30 is determined and fixed. The actual mould used for each of the wafers may be different and in fact the shapes of the reflectors are preferably different from one wafer to the next since this avoids interference from reflection of light. The reflectors serve to reflect some, but not necessarily all, of the light incident upon them and in some
examples may be coated with an optically reflective material to increase the proportion of incident light that they reflect. In some examples, a reflective coating of a metal such as silver, gold or aluminium is provided on the outer surface of the reflectors.

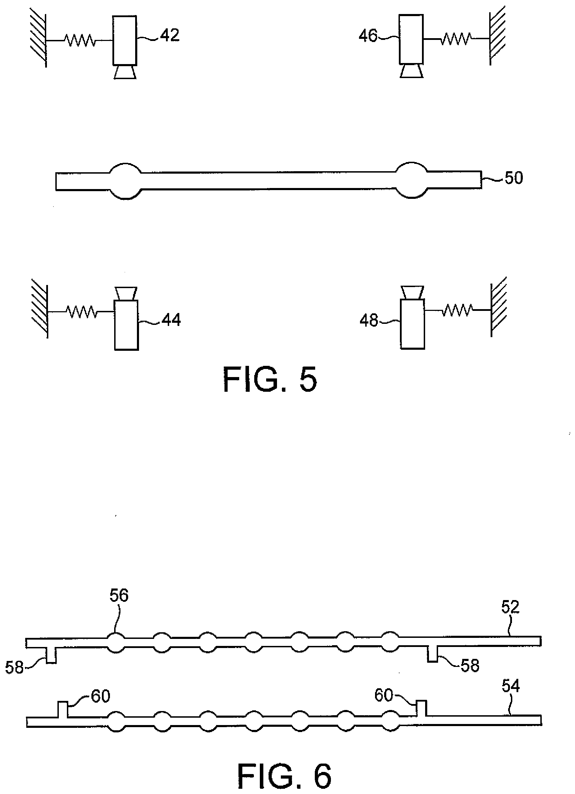

The process by which lens alignment is achieved will now be described in detail. Figure 5 is a schematic representation of an arrangement by which plural interferometers may be positioned relative to each other. In the example shown, there are four interferometers 42 to 48. A reference disk 50 is provided. The interferometers 42 to 48 are aligned with the reference disk 50. This may be achieved by generating an output from each of the interferometers and moving interferometers until the expected
interference pattern is received by a corresponding detector (not shown). Once each of the interferometers has been correctly positioned, the reference disk 50 is removed.

At this stage, the optical disks such as the optical wafers 26 and 28 shown in Figure 3 may be positioned between the interferometers and aligned as described above. Preferably a clue or curable polymer is provided on the surface of the wafers facing the other, such that when aligned and pushed towards each other a curable optical material fills the space between them. Thus, the interferometers 42 to 48 are fixed to a frame and the wafers are moved to a desired offset until a desired interference output from the respective interferometers is received. The frame will typically include a support plate including vacuum elements to keep the wafer attached to the plate on which each of the wafers is mounted. The wafers are usually thin glass wafers and so the use of support plates is advantageous as it provides structural integrity and strength to the wafers during the alignment and fixing process.

Referring again to Figure 3, when the optical disks 26 and 28 are arranged in the desired location, they are fixed in place. This is preferably achieved by the use of a frame (not shown) which holds the disks in their arrived at position. An optical glue, if not already present, is then injected between the disks and cured with an appropriate source of radiation, such as a UV light.

Once this has been achieved, and the optical glue has set, due to the original relative configuration of the lenses and alignment lenses 36 on the wafers, it can be known that the lenses on the respective wafers will be aligned. Thus, the individual or plural lens stacks can be cut from the wafer assembly.

In the example shown in Figure 3, the arrangement which is being aligned simply comprises two optical wafers 26 and 28. It will be appreciated that more than one optical wafer can be used and in fact, in a typical example, a spacer disk is provided between the two optical wafers. This need not affect the alignment process since the optical interaction between the interferometers and the wafers is with the alignment lenses 36 on the outer surfaces of the optical wafers 26 and 28. The spacer disk itself may be formed of an optical material.

The alignment lenses 36 are, in the method described, not specifically used as lenses, but rather as reflector surfaces. However the ability to form the alignment lenses 36 in determined configuration with respect to the lens elements 30 on the wafer is a particularly preferred embodiment.

In a different example, instead of moulding alignment lenses onto the surface of the wafer, other alignment means are moulded. This moulding stage is again performed during the same moulding stage by which the lens elements 30 are formed. This ensures that the relative positioning between the alignment means and the lens elements 30 is fixedly determined.

Figure 6 shows an example of two optical wafers 52 and 54 each including plural lens elements 56. Alignment projections 58 and 60 are provided on the wafers 52 and 54, respectively. The alignments projections 58 and 60 are formed using a common mould as used to form the lens element 56. Thus, the relative positioning of the alignment elements with respect to the lens elements 56 is determined.

Once formed in this manner, the two wafers 52 and 54 can simply be brought into vertical registration in such a way that the alignment projections interact. In the example shown, the alignment projections 60 will fit "inside the alignment projections 58. In another example, on one of the wafers there are provided alignment projections, whereas on another wafer there are provided alignment recesses. Clearly, in the view shown in Figure 6, only two alignment projections are shown on each of the wafers. Typically, at least three, and preferably at least four will be provided, as shown in Figure 4.

Embodiments of the present invention have been described with particular reference to the examples illustrated. However, it will be appreciated that variations and modifications may be made to the examples described within the scope of the present invention. In the present disclosure, it is to be noted that the embodiments that are not covered by the appended set of claims are not part of the disclosure, and technical features that are present in the independent claims are essential in the disclosure.

## Claims

1. A method of aligning optical wafers having formed thereon at least one lens element and at least three reflectors in determined positions, the method comprising:
providing a first wafer (26) having at least three reflectors (36) and one lens (32) formed thereon in fixed and determined relative positions, wherein the at least three reflectors (36) and one lens (32) of the first wafer (26) are formed from a first mould;
providing a second wafer (28) having at least three reflectors (36) and one lens (34) formed thereon in fixed and determined relative positions, wherein the at least three reflectors (36) and one lens (34) of the second wafer (28) are formed from a second mould;
using a first interferometer (40) to align a first wafer (26) by optical interaction between the interferometer (40) and the reflectors (36) on the first wafer (26);
using a second interferometer (38) to align a second wafer (28) by optical interaction between the interferometer (38) and the reflectors (36) on the second wafer (28), wherein the reflectors on the first and second wafers are lenses used exclusively for alignment of the wafers;
whereby the relative position of the lenses on each of the first and second wafer is thereby determined.

2. A method according to claim 1, further comprising generating an output signal from the interferometers for use in determining the position of the corresponding wafer.

3. A method according to claim 2, comprising, in dependence on the output signal modifying or fixing the position of the wafer using an actuator (35).

4. A method according to claim 3, comprising, in dependence on the output signal modifying or fixing the position of the wafer using at least six actuators (35), so as to vary the position and/or orientation of the wafers in three dimensions.

5. A method according to any of claims 1 to 4, comprising using a first actuator (35) to move the wafer in two dimensions so as to align the interferometer with a first reflector on the wafer.

6. A method according to claim 5, comprising using a second actuator (35) and a second reflector on the wafer to rotate the wafer about an axis perpendicular to the plane of wafer and passing through the first reflector.

7. A method according to claim 6, comprising using a third actuator (35) and a third reflector on the wafer to rotate the wafer about an axis in the plane of the wafer and passing through the first and second reflectors.

8. A method of making a wafer-based lens stack, the method comprising:
aligning two or more optical wafers using the method of any of claims 1 to 7;
once the two or more wafers are aligned as desired, fixing the wafers in place by injecting a curable optical polymer into a space between the wafers; and
applying curing radiation to fix the wafers in place with the curable optical polymer.

9. A method of making a wafer-based lens stack, the method comprising:
aligning two or more optical wafers using the method of any of claims 1 to 7, wherein the wafers have on them during alignment a curable optical polymer, and once aligned, applying curing radiation to fix the wafers in place with the curable optical polymer.

10. A method according to claim 8, comprising after the wafers have been fixed in place but prior to injecting the curable optical polymer, inserting a spacer disc (10) between the wafers.

11. A system for a method of aligning optical wafers in accordance with any one of claims 1 to 7, wherein each wafer has formed thereon at least one lens elements and at least three reflectors in determined positions, the system comprising:
a first interferometer (40) configured to align a first wafer (26) by optical interaction between the interferometer (40) and the reflectors (36) on the first wafer (26), wherein the at least three reflectors (36) and one lens (32) of the first wafer (26) are formed from a first mould;
a second interferometer (38) configured to align a second wafer (28) by optical interaction between the interferometer (38) and the reflectors (36) on the second wafer (28), wherein the at least three reflectors (36) and one lens (34) of the second wafer (28) are formed from a second mould;
plural actuators (35) arranged to control the position of the first and second wafers and to move the wafers in response to outputs received from the interferometers.

12. A system according to claim 11, comprising a support plate to receive each wafer, in which the actuators are configured to control the position of the wafer by controlling the position of the support plates.

13. A system according to claim 11 or 12, in which the actuators are linear actuators.

## Patentansprüche

1. Verfahren zum Ausrichten von optischen Wafern, auf denen in bestimmten Positionen mindestens ein Linsenelement und mindestens drei Reflektoren gebildet sind, wobei das Verfahren Folgendes umfasst:
Bereitstellen eines ersten Wafers (26), auf dem in festen und bestimmten relativen Positionen mindestens drei Reflektoren (36) und eine Linse (32) gebildet sind, wobei die mindestens drei Reflektoren (36) und die eine Linse (32) des ersten Wafers (26) aus einer ersten Form gebildet sind;
Bereitstellen eines zweiten Wafers (28), auf dem in festen und bestimmten relativen Positionen mindestens drei Reflektoren (36) und eine Linse (34) gebildet sind, wobei die mindestens drei Reflektoren (36) und die eine Linse (34) des zweiten Wafers (28) aus einer zweiten Form gebildet sind;
Verwenden eines ersten Interferometers (40), um durch optische Interaktion zwischen dem Interferometer (40) und den Reflektoren (36) auf einem ersten Wafer (26) den ersten Wafer (26) auszurichten;
Verwenden eines zweiten Interferometers (38), um durch optische Interaktion zwischen dem Interferometer (38) und den Reflektoren (36) auf einem zweiten Wafer (28) den zweiten Wafer (28) auszurichten, wobei die Reflektoren auf dem ersten und dem zweiten Wafer Linsen sind, die ausschließlich zur Ausrichtung der Wafer verwendet werden;
wodurch die relative Position der Linsen auf jedem des ersten und des zweiten Wafers dadurch bestimmt wird.

2. Verfahren nach Anspruch 1, das ferner das Erzeugen eines Ausgangssignals von den Interferometern zur Verwendung beim Bestimmen der Position des entsprechenden Wafers umfasst.

3. Verfahren nach Anspruch 2, das in Abhängigkeit vom Ausgangssignal das Modifizieren oder Fixieren der Position des Wafers unter Verwendung eines Aktuators (35) umfasst.

4. Verfahren nach Anspruch 3, das in Abhängigkeit vom Ausgangssignal das Modifizieren oder Fixieren der Position des Wafers unter Verwendung von mindestens sechs Aktuatoren (35) umfasst, um die Position und/oder die Orientierung der Wafer in drei Dimensionen zu variieren.

5. Verfahren nach einem der Ansprüche 1 bis 4, das das Verwenden eines ersten Aktuators (35) umfasst, um den Wafer in zwei Dimensionen zu bewegen, um das Interferometer auf einen ersten Reflektor auf dem Wafer auszurichten.

6. Verfahren nach Anspruch 5, das das Verwenden eines zweiten Aktuators (35) und eines zweiten Reflektors auf dem Wafer umfasst, um den Wafer um eine Achse, die senkrecht zur Ebene des Wafers und durch den ersten Reflektor verläuft, zu drehen.

7. Verfahren nach Anspruch 6, das das Verwenden eines dritten Aktuators (35) und eines dritten Reflektors auf dem Wafer umfasst, um den Wafer um eine Achse, die in der Ebene des Wafers und durch den ersten und den zweiten Reflektor verläuft, zu drehen.

8. Verfahren zum Herstellen eines waferbasierten Linsenstapels, wobei das Verfahren Folgendes umfasst:
Ausrichten von zwei oder mehr optischen Wafern unter Verwendung des Verfahrens von einem der Ansprüche 1 bis 7;
Fixieren der Wafer am Ort durch Einspritzen eines aushärtbaren optischen Polymers in einen Raum zwischen den Wafern, nachdem die zwei oder mehr Wafer wie gewünscht ausgerichtet wurden; und
Anwenden einer Aushärtungsstrahlung, um die Wafer mit dem aushärtbaren optischen Polymer am Ort zu fixieren.

9. Verfahren zum Herstellen eines waferbasierten Linsenstapels, wobei das Verfahren Folgendes umfasst:
Ausrichten von zwei oder mehr optischen Wafern unter Verwendung des Verfahrens von einem der Ansprüche 1 bis 7, wobei sich auf den Wafern während der Ausrichtung ein aushärtbares optisches Polymer befindet, und Anwenden einer Aushärtungsstrahlung, um die Wafer mit dem aushärtbaren optischen Polymer am Ort zu fixieren, nachdem sie ausgerichtet wurden.

10. Verfahren nach Anspruch 8, das das Einsetzen einer Distanzscheibe (10) zwischen den Wafern umfasst, nachdem die Wafer am Ort fixiert wurden, aber vor dem Einspritzen des aushärtbaren optischen Polymers.

11. System für ein Verfahren zum Ausrichten von Wafern nach einem der Ansprüche 1 bis 7, wobei auf jedem Wafer in bestimmten Positionen mindestens ein Linsenelement und mindestens drei Reflektoren gebildet sind, wobei das System Folgendes umfasst:
ein erstes Interferometer (40), das dazu ausgelegt ist, durch optische Interaktion zwischen dem Interferometer (40) und den Reflektoren (36) auf einem ersten Wafer (26) den ersten Wafer (26) auszurichten, wobei die mindestens drei Reflektoren (36) und die eine Linse (32) des ersten Wafers (26) aus einer ersten Form gebildet sind;
ein zweites Interferometer (38), das dazu ausgelegt ist, durch optische Interaktion zwischen dem Interferometer (38) und den Reflektoren (36) auf einem zweiten Wafer (28) den zweiten Wafer (28) auszurichten, wobei die mindestens drei Reflektoren (36) und die eine Linse (34) des zweiten Wafers (28) aus einer zweiten Form gebildet sind;
mehrere Aktuatoren (35), die angeordnet sind, die Position des ersten und des zweiten Wafers zu steuern und die Wafer in Reaktion auf Ausgaben, die von den Interferometern empfangen werden, zu bewegen.

12. System nach Anspruch 11, das eine Stützplatte zum Empfangen von jedem Wafer umfasst, bei dem die Aktuatoren dazu ausgelegt sind, die Position des Wafers durch Steuern der Position der Stützplatten zu steuern.

13. System nach Anspruch 11 oder 12, bei dem die Aktuatoren Linearaktuatoren sind.

## Revendications

1. Procédé d'alignement de tranches optiques ayant, formés sur celles-ci, au moins un élément lentille et au moins trois réflecteurs dans des positions déterminées, le procédé comprenant :
la fourniture d'une première tranche (26) ayant au moins trois réflecteurs (36) et une lentille (32) formés sur celle-ci dans des positions relatives fixes et déterminées, dans lequel les au moins trois réflecteurs (36) et une lentille (32) de la première tranche (26) sont formés à partir d'un premier moule ;
la fourniture d'une seconde tranche (28) ayant au moins trois réflecteurs (36) et une lentille (34) formés sur celle-ci dans des positions relatives fixes et déterminées, dans lequel les au moins trois réflecteurs (36) et une lentille (34) de la seconde tranche (28) sont formés à partir d'un second moule ;
l'utilisation d'un premier interféromètre (40) pour aligner une première tranche (26) par interaction optique entre l'interféromètre (40) et les réflecteurs (36) sur la première tranche (26) ;
l'utilisation d'un second interféromètre (38) pour aligner une seconde tranche (28) par interaction optique entre l'interféromètre (38) et les réflecteurs (36) sur la seconde tranche (28), dans lequel les réflecteurs sur les première et seconde tranches sont des lentilles utilisées exclusivement pour l'alignement des tranches ;
moyennant quoi la position relative des lentilles sur chacune de la première et de la seconde tranche est ainsi déterminée.

2. Procédé selon la revendication 1, comprenant en outre la génération d'un signal de sortie à partir des interféromètres pour une utilisation dans la détermination de la position de la tranche correspondante.

3. Procédé selon la revendication 2, comprenant, en dépendance du signal de sortie, la modification ou la fixation de la position de la tranche à l'aide d'un actionneur (35).

4. Procédé selon la revendication 3, comprenant, en dépendance du signal de sortie, la modification ou la fixation de la position de la tranche à l'aide d'au moins six actionneurs (35), de façon à faire varier la position et/ou l'orientation des tranches dans trois dimensions.

5. Procédé selon l'une quelconque des revendications 1 à 4, comprenant l'utilisation d'un premier actionneur (35) pour déplacer la tranche dans deux dimensions de façon à aligner l'interféromètre avec un premier réflecteur sur la tranche.

6. Procédé selon la revendication 5, comprenant l'utilisation d'un deuxième actionneur (35) et d'un deuxième réflecteur sur la tranche pour mettre en rotation la tranche autour d'un axe perpendiculaire au plan de tranche et passant par le premier réflecteur.

7. Procédé selon la revendication 6, comprenant l'utilisation d'un troisième actionneur (35) et d'un troisième réflecteur sur la tranche pour mettre en rotation la tranche autour d'un axe dans le plan de la tranche et passant par les premier et deuxième réflecteurs.

8. Procédé de fabrication d'un empilement de lentilles à base de tranches, le procédé comprenant :
l'alignement de deux tranches optiques ou plus à l'aide du procédé selon l'une quelconque des revendications 1 à 7 ;
une fois que les deux tranches ou plus sont alignées comme souhaité, la fixation des tranches en place par l'injection d'un polymère optique durcissable dans un espace entre les tranches ; et
l'application d'un rayonnement de durcissement pour fixer les tranches en place avec le polymère optique durcissable.

9. Procédé de fabrication d'un empilement de lentilles à base de tranches, le procédé comprenant :
l'alignement de deux tranches optiques ou plus à l'aide du procédé selon l'une quelconque des revendications 1 à 7, dans lequel les tranches possèdent sur elles, au cours de l'alignement, un polymère optique durcissable, et une fois alignées, l'application d'un rayonnement de durcissement pour fixer les tranches en place avec le polymère optique durcissable.

10. Procédé selon la revendication 8, comprenant, après que les tranches ont été fixées en place mais avant d'injecter le polymère optique durcissable, l'insertion d'un disque écarteur (10) entre les tranches.

11. Système pour un procédé d'alignement de tranches optiques selon l'une quelconque des revendications 1 à 7, dans lequel chaque tranche possède, formés sur celle-ci, au moins un élément lentille et au moins trois réflecteurs dans des positions déterminées, le système comprenant :
un premier interféromètre (40) configuré pour aligner une première tranche (26) par interaction optique entre l'interféromètre (40) et les réflecteurs (36) sur la première tranche (26), dans lequel les au moins trois réflecteurs (36) et une lentille (32) de la première tranche (26) sont formés à partir d'un premier moule ;
un second interféromètre (38) configuré pour aligner une seconde tranche (28) par interaction optique entre l'interféromètre (38) et les réflecteurs (36) sur la seconde tranche (28), dans lequel les au moins trois réflecteurs (36) et une lentille (34) de la seconde tranche (28) sont formés à partir d'un second moule ;
plusieurs actionneurs (35) agencés pour commander la position des première et seconde tranches et pour déplacer les tranches en réponse à des sorties reçues à partir des interféromètres.

12. Système selon la revendication 11, comprenant une plaque de support pour recevoir chaque tranche, dans lequel les actionneurs sont configurés pour commander la position de la tranche par la commande de la position des plaques de support.

13. Système selon la revendication 11 ou 12, dans lequel les actionneurs sont des actionneurs linéaires.
